# EUROPÄISCHE PATENTSCHRIFT

(11) **EP 2 875 329 B1**
(45) Veröffentlichungstag und Bekanntmachung des Hinweises auf die Patenterteilung: **22.04.2020**
(21) Anmeldenummer: 13737136.5
(22) Anmeldetag: 04.07.2013
(51) Int. Cl.: G01M 13/027, F03D 17/00

(54) **PRÜFSTAND UND VERFAHREN ZUM PRÜFEN EINES TRIEBSTRANGS EINER WINDENERGIEANLAGE**
TEST BENCH AND METHOD FOR TESTING THE DRIVE TRAIN OF A WIND TURBINE
BANC D'ESSAI ET PROCÉDÉ POUR CONTRÔLER LA CHAÎNE CINÉMATIQUE D'UNE ÉOLIENNE

(30) Priorität: 23.07.2012 DE 102012212844
(43) Veröffentlichungstag der Anmeldung: 27.05.2015
(73) Patentinhaber: Senvion Deutschland GmbH, 22297 Hamburg (DE)
(72) Erfinder: EUSTERBARKEY, Carsten, 25813 Simonsberg (DE)
(74) Vertreter: Wallinger Ricker Schlotter Tostmann
(86) Internationale Anmeldenummer: PCT/EP2013/001960
(87) Internationale Veröffentlichungsnummer: WO 2014/015941

(56) Entgegenhaltungen:
- DE-A1-102010 017 456
- US-A1- 2005 172 729
- US-A1- 2011 023 629

## Beschreibung

Die Erfindung betrifft einen Prüfstand zum Prüfen eines Triebstrangs einer Windenergieanlage, umfassend eine Antriebseinrichtung zum Einbringen einer Prüfleistung in den Triebstrang, die mit einem zu prüfenden Triebstrang lösbar verbindbar ist. Weiter betrifft die Erfindung ein Verfahren zum Prüfen eines Triebstrangs einer Windenergieanlage mit einem Prüfstand sowie einen Triebstrang einer Windenergieanlage.

Im Bereich der Konstruktion von Windenergieanlagen werden in einigen Fällen Komponenten einer Windenergieanlage, und zwar mechanische, elektrische und/oder elektronische Komponenten, in einem Prüfstand geprüft, bevor die Windenergieanlage installiert und in Betrieb genommen wird. Solche Prüfstände, die einzelne Komponenten der Windenergieanlage oder auch eine komplett zusammengebaute Gondel bzw. ein komplett zusammengebautes Maschinenhaus prüfen, werden auch End-of-Line-Prüfstände genannt. Solche Prüfstände umfassen neben einer Steuerungselektronik einen oder mehrere Motoren, die eine Prüfleistung bzw. ein Drehmoment auf einen Triebstrang übertragen, insbesondere dort, wo bei der fertig installierten Windenergieanlage der Rotor angesetzt wird. Mittels solcher Prüfstände wird in einer Prüfstandssequenz getestet, ob die mechanischen, elektrischen und/oder elektronischen Komponenten vorgegebenen Richtwerten entsprechen. Die Prüfstandssequenz kann einige Stunden, beispielsweise bis zu 6 Stunden, dauern.

Die im Prüfstand getesteten Komponenten oder Maschinenhäuser werden anschließend, nach bestandener Prüfung, zum Aufstellungsort transportiert und dort die Windenergieanlage aufgestellt.

Aus DE 10 2010 017 456 A1 ist ein Prüfstand mit einer Belastungsvorrichtung am Beispiel eines Prüfstandes für Windenergieanlagen offenbart. Die Belastungsvorrichtung umfasst eine Lagerwelle, die einerseits mit einer Prüflingswelle und andererseits mit einem Antrieb zur Übertragung eines Drehmoments oder Torsionsmoments verbindbar ist, einen Lasteinleitungsrahmen, der auf der Lagerwelle drehbar gelagert ist, und wenigstens einen Linearantrieb, der zur Einleitung von Axialkräften und/oder Radialkräften und/oder Momenten mit dem Lasteinleitungsrahmen verbunden ist.

In US 2011/0023629 A1 ist ebenfalls ein Teststand für Windturbinen offenbart. Dieser umfasst einen Hauptantrieb und eine Aktuatoranordnung, deren eines Ende dazu ausgebildet ist, an eine Welle eines Prüflings angeschlossen zu werden, wobei auch die Aktuatoranordnung eine Welle umfasst.

US 2005/0172729 A1 offenbart eine Testbank für Windenergieanlagen, bei der auf einem massiven Boden eine feststehende Tragstruktur verankert ist, die ihrerseits eine mobile Struktur trägt, die an eine Rotorwelle eines Turmkopfes einer zu prüfenden Windenergieanlage angesetzt wird und diese mittels linearer Aktuatoren mit verschiedenen Belastungen beaufschlagt.

Aus WO 2007/140789 A1 ist ein Windturbinentestsystem bekannt, bei dem ein Triebstrang einschließlich Elektronik und Generator in einen Teststand eingebaut sind, auf die langsame Welle ein Drehmoment ausgeübt wird und außerdem ein Stromnetzsimulationssystem umfasst ist, so dass getestet wird, ob die Windenergieanlage verschiedenen Netzbedingungen entspricht.

Die bekannten End-of-Line-Prüfstände oder Prüfstände sind stationär auf dem Boden verankert und verfügen über Antriebseinrichtungen, die über eine flexible Kupplung mit dem Prüfling, also dem zu prüfenden Triebstrang, verbunden werden. Ein entsprechender Prüfstand ist beispielsweise aus WO 2007/140789 A1 bekannt. Solche End-of-Line-Prüfstände sind sehr aufwändig und unflexibel und sind in der Regel nur an einen Typ eines Triebstrangs angepasst.

Idealerweise wird eine komplette Maschinengondel getestet. Diese ist mit mehr als 320 Tonnen Gewicht und Abmessungen von ca. 6x19m bei den unter den Bezeichnungen 5M und 6M vertriebenen Windenergieanlagen der Anmelderin nicht sehr mobil. Entsprechend aufwändig gestaltet sich die Vorbereitung und Prüfung im Prüfstand.

Es liegt der vorliegenden Erfindung die Aufgabe zugrunde, einen Prüfstand sowie ein Verfahren zum Prüfen eines Triebstrangs einer Windenergieanlage unter realistischen Bedingungen bereitzustellen, mit denen eine flexible Anpassung an verschiedene Windenergieanlagentypen möglich ist, wobei der konstruktive Aufwand gering gehalten werden soll.

Diese Aufgabe wird durch einen Prüfstand zum Prüfen eines Triebstrangs einer Windenergieanlage, umfassend eine Antriebseinrichtung zum Einbringen einer Prüfleistung in den Triebstrang, die mit einem zu prüfenden Triebstrang lösbar verbindbar ist, gelöst, der sich dadurch auszeichnet, dass die Antriebseinrichtung zur Prüfung eines Triebstrangs abnehmbar auf oder an dem Triebstrang auf- oder angesetzt und gelagert ist oder wird, wobei bei auf- oder angesetzter Antriebseinrichtung ein überwiegender Teil der Gewichtskraft der Antriebseinrichtung auf dem Triebstrang lastet.

Anders als im Stand der Technik ist der erfindungsgemäße Prüfstand somit nicht stationär auf dem Boden verankert, sondern weist eine, vorzugsweise in abgenommenen Zustand frei bewegliche, Antriebseinrichtung auf, die zur Prüfung eines Triebstrangs auf oder an den Triebstrang auf- oder angesetzt wird. Dabei wird außerdem ein überwiegender Teil der Gewichtskraft, also insbesondere über 50% der Gewichtskraft, der Antriebseinrichtung so gelagert, dass sie auf dem Triebstrang lastet.

Im Vergleich mit der üblichen Vorgehensweise, dass die Antriebseinrichtung über eine flexible Kupplung mit dem Prüfling verbunden ist, ermöglicht dies eine deutlich realistischere Prüfung des Triebstrangs.

Im Rahmen der Erfindung kann ein einzelner Triebstrang, also eine Rotorwelle oder ein rotorwellenloser Triebstrang mit gegebenenfalls weiteren Komponenten, etwa einem Getriebe, einer schnellen Welle usw., geprüft werden, der oder die allein oder eingebaut in eine Maschinengondel oder ein Maschinengehäuse ist oder sind.

Zum An- oder Aufsetzen der Antriebseinrichtung an oder auf den Triebstrang dient vorzugsweise ein Antriebsflansch des Triebstrangs, an bzw. auf dem die Antriebseinrichtung befestigt wird. Der Antriebsflansch kann bspw. an einer Rotorwelle angeordnet sein und im Betrieb der Windenergieanlage mit einer Rotornabe verbunden sein, oder bei einem rotorwellenlosen Antrieb ebenfalls zur Befestigung einer Rotornabe dienen. Der Antriebsflansch kann alternativ auch Teil der Rotornabe sein, die in diesem Fall zum zu prüfenden Triebstrang gehört. Die Antriebseinheit kann auch in geeigneter Weise an dem einen oder den mehreren Flanschen für das Rotorblatt oder die Rotorblätter an der Rotornabe angreifen.

Vorzugsweise entspricht der im aufgesetzten Zustand auf dem Triebstrang lastende Teil der Gewichtskraft der Antriebseinrichtung einer Gewichtskraft eines Rotors der Windenergieanlage. Damit wird der Triebstrang unter realistischen Bedingungen geprüft. Der mobile erfindungsgemäße Prüfstand bzw. dessen Antriebseinrichtung weist daher bevorzugt ein Gewicht auf, das in der Größenordnung oder etwas über dem Gewicht des Rotors der fertig montierten Windenergieanlage liegt.

Bei modernen Windenergieanlagen, beispielsweise den unter der Typenbezeichnung 5M oder 6M der Anmelderin vertriebenen Windenergieanlagen, weist das Maschinenhaus ein Gewicht von über 300 Tonnen auf. Der Rotor bei der 5M weist ein Gewicht von 130 Tonnen auf. Ein kompakt gebauter, insbesondere fliegend gelagerter, Prüfantrieb mit 50 bis 150 Tonnen Gewicht ist dabei deutlich mobiler als eine Gondel von mehr als 300 Tonnen Gewicht. Da der Prüfstand außerdem eine wesentlich geringere Betriebsstundenzahl als die Windturbinen aufweist, kann er deutlich leichter und kompakter als die WEA-Gondel ausgeführt werden.

Das Gewicht bzw. das Massenmoment des Antriebs wirkt vorzugsweise maximal so, dass es dem Rotor der kleinsten zu testenden Anlage entspricht. Gegebenenfalls wird die Masse vorteilhafterweise durch Trimmgewichte auf Werte größerer Rotoren angepasst. Dadurch sind realistischere Gesamtmassen, Gondelverformungen und gegebenenfalls sogar Antriebsstrang-Trägheiten durch die simulierte Rotormasse simulierbar.

Alternativ, wenn der Antrieb mehr als der Rotor der kleinsten zu testenden Anlage wiegt, wird ein Teil des Gewichts direkt auf den Erdboden übertragen.

Vorzugsweise ist die Lagerung der Antriebseinrichtung auf dem Triebstrang eine fliegende Lagerung. Damit wird der Triebstrang nicht unnötig oder übermäßig axial belastet. Dies trägt auch zur Schonung des Triebstrangs bei.

Der besondere Vorteil bei der fliegenden Lagerung besteht darin, dass die zeitaufwändige genaue Ausrichtung der Antriebseinheit auf den Triebstrang entfällt.

Vorteilhafterweise sind Zwischenflansche für unterschiedliche Anlagen vorgesehen. Dies ermöglicht eine flexible Einsetzbarkeit des Prüfstands, wenn die Anlagen verschiedene Flansche aufweisen.

Vorzugsweise weist die Antriebseinrichtung ein Großzahnrad auf, das auf einen Antriebsflansch aufsetzbar ist, sowie ein oder mehrere Ritzel, die am oder im Umfang des Großzahnrads in eine Außenzahnung oder Innenzahnung des Großzahnrads eingreifen. Die Ritzel sind vorzugsweise gleichmäßig um den Umfang des Großzahnrades verteilt. Durch die Mehrzahl oder Vielzahl von Ritzeln ist jedes Ritzel nur mit einem kleinen Teil an der Einbringung der Prüfleiste bzw. des Prüfdrehmoments auf das Großzahnrad und damit den Triebstrang beteiligt. Dies schont das Material der Antriebseinrichtung. Ebenfalls lässt sich auf diese Weise eine gleichmäßige Belastung in Umfangsrichtung erreichen, wobei Unwuchten, die für die Antriebseinrichtung und den Prüfling schädlich sind, vermieden werden.

Alternativ ist ebenfalls bevorzugt ein elektrischer Direktantrieb ohne Verzahnung vorgesehen.

Die Antriebseinrichtung weist einen oder mehrere, insbesondere hydraulische oder elektrische, Antriebsmotoren auf. Bei hydraulischen Antriebsmotoren ist vorzugsweise eine stationäre Hydraulikeinheit zur Versorgung der hydraulischen Antriebsmotoren vorgesehen.

Vorzugsweise wirken die Antriebsmotoren jeweils auf ein Ritzel, wobei die Antriebsmotoren insbesondere mittels einer hydraulischen Ringleitung oder durch eine elektronische Steuerung synchronisiert sind. Eine hydraulische Ringleitung, die die hydraulischen Antriebsmotoren miteinander verbindet, sorgt dafür, dass eine Prüfleistungseinwirkung gleichmäßig um den Umfang verteilt stattfindet. Eine elektronische Steuerung, die die Elektromotoren synchronisiert, ist ebenfalls erfindungsgemäß einsetzbar. Sie kann insbesondere erhöhte Lastzustände einzelner Elektromotoren erkennen, reduzieren und durch die anderen Elektromotoren kompensieren, so dass die Lasteinwirkung vergleichmäßigt wird.

Vorteilhafterweise umfasst die Antriebseinrichtung eine Drehmomentenstütze, die insbesondere zwei sich auf dem Boden abstützende Stützfüße aufweist. Diese Drehmomentenstütze stützt einerseits den kleineren Teil der Gewichtskraft der Antriebseinrichtung gegenüber dem Boden ab und fängt das Drehmoment auf, das durch die Antriebseinrichtung auf den Prüfling ausgeübt wird.

Vorzugsweise weist die Drehmomentenstütze eine Zwangslast-Kompensation, insbesondere eine Crossfeed-Hydraulik oder Piezoelemente, auf. Die zwangslastfreie Einleitung von Drehmomenten bedeutet, dass durch die erforderliche Abstützung des Drehmoments am Boden keine Querkräfte in die Struktur eingeleitet werden, so dass der Triebstrang nicht durch ein radiales Ausweichen der Antriebseinrichtung unter der Einwirkung des eingebrachten Prüfdrehmoments verformt oder belastet wird. Dies erreicht man bevorzugt durch eine Crossfeed-Hydraulik, bei der zwei Hydraulikzylinder im Kraftfluss der Drehmomentenstütze kreuzweise so miteinander verschaltet werden, dass sie nur zwei entgegengesetzte Kräfte von gleichem Betrag aufnehmen können, sodass die Kräftesumme stets Null beträgt. Dadurch ergibt sich eine Querkraftfreiheit. Die Zwangslastfreiheit bzw. Zwangskraftfreiheit dient dazu, den Prüfling zu schonen. Dieser wird daher nicht bereits in der Prüfung vorgeschädigt. Anstelle einer Crossfeed-Hydraulik kann eine Zwangslast-Kompensation vorteilhafterweise auch durch Piezoelemente geschehen, die hochbelastbar und schnell steuerbar sind.

Wenn die Maschinengondel ausreichend schwer ist, kann in einer vorteilhaften einfachen Ausführung der Transportträger der Gondel zur Abstützung des Triebstrangdrehmoments ausreichen. Andernfalls ist durch geeignete konstruktive Maßnahmen, z. B. durch Verbreiterung der Aufstandsfläche für eine sichere Einleitung des Drehmoments in den Boden zu sorgen.

In einer vorteilhaften Weiterbildung weist die Antriebseinrichtung eine Haltevorrichtung auf, an der die Antriebseinrichtung anhängbar ist, wobei die Haltevorrichtung insbesondere eine Mehrzahl von Halteöffnungen oder ein Langloch, insbesondere mit Raststellen, für ein Hebezeug oder ein anderes Hebemittel aufweist, mittels denen eine Achsneigung der Antriebseinrichtung im hängenden Zustand einstellbar ist. Mit der Haltevorrichtung ist es möglich, die Antriebseinrichtung des Prüfstands beispielsweise in einer Prüfhalle an einem Deckenschienensystem, das eine hohe Traglast aufweist, frei zu verfahren und beispielsweise von einem Triebstrang zum nächsten Triebstrang zu bringen, ohne dass die Triebstränge oder Gondeln selbst bewegt werden müssen. Die Achsneigung kann vorzugsweise zwischen 0° und 10°, insbesondere zwischen 4° und 7°, verstellt werden.

Das Merkmal, dass die Haltevorrichtung eine Mehrzahl von Halteöffnungen für einen Hebezeug oder ein anderes Hebemittel oder ein entsprechendes, mit Raststellen versehenes Langloch aufweist, bedeutet, dass abhängig davon, welche Halteöffnung für das Hebezeug verwendet wird, der Schwerpunkt der Antriebseinrichtung sich an einer anderen Stelle unter der gewählten Halteöffnung befindet, so dass die Antriebseinrichtung bei jeder Halteöffnung eine unterschiedliche Achsneigung aufweist. Die Halteöffnungen oder Raststellen sind insbesondere so angeordnet, dass vorbestimmte Achsneigungen von bekannten Triebstrangtypen und insbesondere Gondeltypen verschiedener Windenergieanlagentypen einstellbar sind. Die Antriebseinrichtung des erfindungsgemäßen Prüfstands kann dann so angehoben werden, dass sie bereits die korrekte Achsneigung aufweist und somit korrekt fluchtend auf den Triebstrang der zu prüfenden Windenergieanlage aufgesetzt werden kann.

Die erfindungsgemäße Antriebseinrichtung des erfindungsgemäßen Prüfstands ist unabhängig von der Achsneigung der zu prüfenden Anlage einsetzbar und es sind keine großen stationären Prüfstands-Strukturen erforderlich. Der Prüfstand ist flexibel im Einsatz und könnte gegebenenfalls schon vorinstalliert werden, während der Prüfstandsplatz noch durch einen anderen Prüfling belegt ist.

Mittels des mobilen erfindungsgemäßen Prüfstands kann eine Prüfung eines Triebstrangs, gegebenenfalls in der Gondel, auch vor Ort erfolgen, wenn die Antriebseinheit mittels eines Krans auf den Triebstrang aufgesetzt wird. Dabei ist eine Energieversorgung und eine Drehmomentabstützung zu realisieren. Bei großen Offshore-Projekten ist es auch möglich, den gewünschten End-of-Line-Test an der Kaikante eines Hafens mit entsprechender Infrastruktur durchzuführen.

Der erfindungsgemäße Prüfstand erfordert in Bezug auf seine elektrische bzw. hydraulische Energieversorgung eine vorhandene Infrastruktur, ebenso gegebenenfalls einen Netzanschluss, in den der Generator des Prüflings die Energie einspeist. Es ist auch ein Kreisschluss möglich, bei dem der Großteil der benötigten Antriebsenergie durch den Generator der geprüften Windenergieanlage bereitgestellt wird.

Die der Erfindung zugrunde liegende Aufgabe wird auch durch ein Verfahren zum Prüfen eines Triebstrangs einer Windenergieanlage mit einem Prüfstand, der insbesondere erfindungsgemäß wie vorstehend beschrieben ausgebildet ist, gelöst, das sich dadurch auszeichnet, dass eine Antriebseinrichtung des Prüfstands auf oder an einen Triebstrang aufgesetzt oder angesetzt wird, wobei bei der Lagerung ein überwiegender Teil der Gewichtskraft der Antriebseinrichtung auf dem Triebstrang lastet. Die Antriebseinrichtung ist dabei insbesondere frei beweglich ausgebildet. Das Verfahren weist die gleichen Vorteile, Merkmale und Eigenschaften auf, wie der erfindungsgemäße Prüfstand.

Vorzugsweise entspricht der auf dem Triebstrang lastende Teil der Gewichtskraft der Antriebseinrichtung einer Gewichtskraft eines Rotors der Windenergieanlage. Damit ist eine realitätsnahe Simulation des Windenergieanlagenbetriebs möglich.

Das erfindungsgemäße Verfahren erlaubt es ebenfalls, dass vorteilhafterweise die Prüfung mit der Antriebseinrichtung an mehreren Triebsträngen erfolgt, wobei jeweils die Antriebseinrichtung von einem geprüften Triebstrang zu einem zu prüfenden Triebstrang verfahren wird.

Die der Erfindung zugrunde liegende Aufgabe wird schließlich durch einen Triebstrang einer Windenergieanlage gelöst, der sich dadurch auszeichnet, dass er mittels eines zuvor beschriebenen erfindungsgemäßen Verfahrens und/oder mittels eines zuvor beschriebenen erfindungsgemäßen Prüfstands geprüft worden ist. Dieser Triebstrang hat somit eine Prüfung unter realistischen Lastbedingungen überstanden und weist damit eine geringere Ausfallwahrscheinlichkeit auf, als in üblichen stationären Prüfständen geprüfte Triebstränge. Auch eine Windenergieanlage, die einen entsprechenden erfindungsgemäßen Triebstrang aufweist, löst die der Erfindung zugrunde liegende Aufgabe.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Querschnittsdarstellung durch eine Gondel einer Windenergieanlage mit darauf aufgesetztem erfindungsgemäßen Prüfstand und
- Fig. 2: eine schematische Darstellung einer Crossfeed-Hydraulik.

In den Zeichnungen sind jeweils gleiche oder gleichartige Elemente und/oder Teile mit denselben Bezugsziffern versehen, so dass von einer erneuten Vorstellung jeweils abgesehen wird.

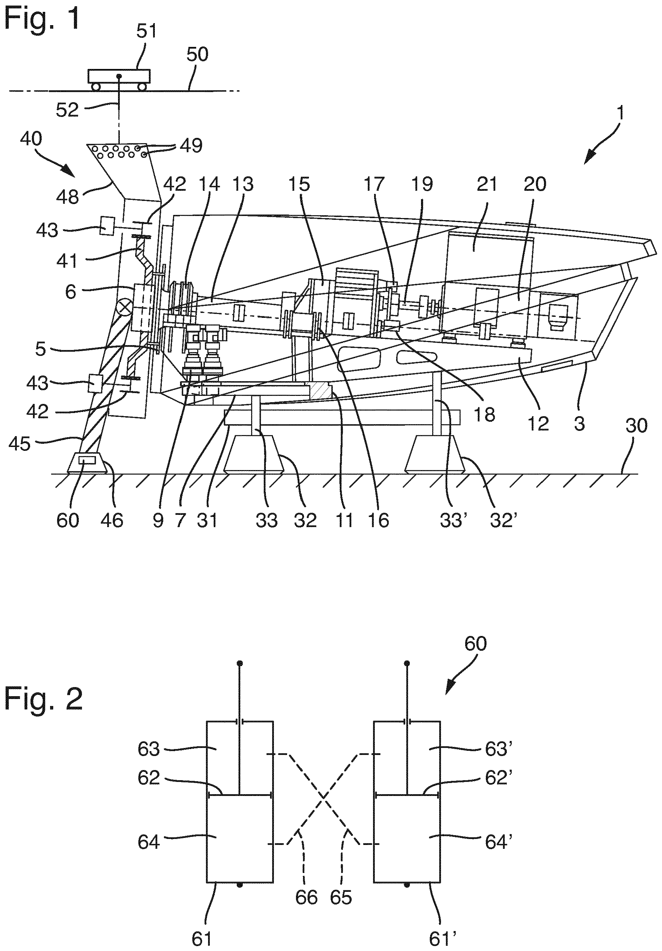

In Fig. 1 ist eine Querschnittsdarstellung durch eine Gondel 3 einer bekannten Windenergieanlage, beispielsweise der Windenergieanlage MD70 der Anmelderin, gezeigt. Die Gondel 3 beherbergt einen Maschinenträger 12, der mit einem Turmkopfdrehkranz 7 verbunden ist. Am Turmkopfdrehkranz 7 greifen Azimutverstellmotoren 9 einer Azimutverstellung an, die nach Installation und Inbetriebnahme die Gondel 3 bzw. den Rotor in Richtung auf die herrschende Windrichtung ausrichten. Hierzu sind vier Azimutverstellmotoren 9 vorhanden, von denen zwei auf der dargestellten Seite angeordnet sind und zwei verdeckt dahinter auf der anderen Seite des Maschinenträgers 12. Ebenfalls greifen am Turmkopfdrehkranz 7 Azimutbremsen 11 an, die der Arretierung der Azimuteinstellung des Rotors dienen.

Der zu prüfende Triebstrang beginnt mit einer Rotorwelle 13, die in einem als Wälzlager ausgebildeten Rotorlager 14 drehbar gelagert ist. Bei der Windenergieanlage MD70 der Anmelderin ist das Rotorlager 14 als Festlager ausgebildet, das nur wenige Millimeter Spiel in axialer Richtung der Rotorwelle 13 erlaubt. Die Rotorwelle 13 treibt ein Getriebe 15, das die langsame Drehbewegung der Rotorwelle in eine schnelle Drehbewegung einer Generatorwelle 19, die mit Kupplungen dargestellt ist, umsetzt, die wiederum einen Generator 20 zur Stromerzeugung antreibt, der mit einem Wärmetauscher 21 ausgestattet ist.

Das Getriebe 15 weist außerdem eine Rotorbremse 17 und einen Schleifringüberträger 18 auf sowie zwei elastische Getriebeaufhängungen bzw. Auflager 16, von denen eines in Fig. 1 dargestellt ist, während sich das andere symmetrisch auf der anderen Seite des Getriebes 15 befindet und somit durch das Getriebe 15 verdeckt ist.

Das Auflager bzw. die elastische Getriebeaufhängung 16 ist konventionell gestaltet und besteht aus hohlzylindrischen Elastomerkörpern aus zwei halbzylindrischen Teilkörpern, die um einen zylindrischen Bolzen herum angeordnet sind. Mit seinen zylindrischen Lagern, deren Zylinderachse parallel zur Rotorwelle 13 ausgerichtet ist, handelt es sich bei dem Auflager 16 um ein Loslager, da es aufgrund seiner Weichheit in dieser Richtung nur wenig Rotorschubkraft in Richtung der Rotorwellenachse aufnimmt.

Die Gondel 3 ist zur Prüfung auf einem Lagerrahmen 31 angeordnet und mittels Füßen 32, 32' und Bolzen 33, 33' gegenüber dem Boden fest abgestützt.

Auf einem an der Rotorwelle 13 angeordneten Antriebsflansch 5 sitzt eine erfindungsgemäße Antriebseinrichtung 40 eines erfindungsgemäßen Prüfstands 1 auf. Mit 6 ist ein Pitchschrank für die Blattverstellung bezeichnet, der am Antriebsflansch 5 befestigt ist. In einem Gehäuse weist die Antriebseinrichtung ein Großzahnrad 41 auf, das auf dem Antriebsflansch 5 der Rotorwelle 13 aufsitzt. Eine Drehung des Großzahnrads 41 führt somit auch zu einer Drehung des Triebstrangs. Um den Umfang des Großzahnrads 41 verteilt sind mehrere Ritzel 42, also kleine Zahnräder, angeordnet, deren Zahnräder auf die Zahnräder des Großzahnrads 41 einwirken. Jedes Ritzel ist mit einem Motor 43 versehen, der das Ritzel 42 antreibt. Die Motoren 43 können elektrisch oder hydraulisch sein. Es sind in der Schnittdarstellung in Fig. 1 nur zwei Ritzel 42 und Antriebsmotoren 43 dargestellt, es wird üblicherweise allerdings eine Vielzahl von Antriebsmotoren 43 zu verwenden sein.

Die Antriebsmotoren benötigen eine nicht dargestellte Energieversorgung, z. B. mittels elektrischer Kabel oder hydraulischer Hochdruckschläuche. Das beanspruchte Merkmal "frei beweglich" umfasst, dass es durch die Energieversorgung zu Einschränkungen, z. B. durch die Kabel-/Schlauchlänge kommen kann. Funktionell ist die Antriebseinrichtung 40 aber gegenüber dem Prüfling in allen Richtungen verfahrbar und drehbar.

Das Gehäuse bzw. die Antriebseinrichtung 40 weist eine Drehmomentenstütze 45 auf, die mit einem Fuß 46 oder Stützfuß auf dem Boden 30 aufsitzt. Diese Drehmomentenstütze 45 sorgt dafür, dass das Drehmoment, das durch das Großzahnrad 41 auf den Triebstrang in der Gondel 3 übertragen wird, zum Boden 30 hin abgeleitet wird. Die Drehmomentenstütze weist außerdem eine Cross-feed-Hydraulik 60 auf, die ein radiales Ausweichen verhindert und eine Zwangslastkompensation bewirkt.

Die Antriebseinrichtung 40 weist ferner eine Haltevorrichtung 48 an ihrem oberen Ende auf, in deren oberen Bereich mehrere Halteöffnungen 49 nebeneinander angeordnet sind. Die Halteöffnungen 49 dienen dazu, einen Tragehaken eines Hebezeugs 52 aufzunehmen, so dass die Antriebseinrichtung 40 über das Hebezeug 52 von einer Laufkatze 51 auf einer Trageschiene 50 gehalten und verfahren werden kann. Die verschiedenen Halteöffnungen 49 sind an verschiedenen Positionen in Längsrichtung angeordnet, so dass durch Auswahl einer bestimmten Halteöffnung 49 eine bestimmte Achsneigung der Antriebseinrichtung 40 eingestellt wird. Damit kann die Achsneigung schon vor dem Ankoppeln an einen Triebstrang an die Achsneigung des Triebstrangs in dem jeweiligen Maschinenhaus typgerecht angepasst werden.

Als Hebevorrichtung können Deckenkrane mit Ketten, Stahlseilen oder Kranschlupfen als Hebezeug vorgesehen sein. Alternativ können aber auch Rollwagen mit entsprechenden Justiervorrichtungen zur Höhen- und Winkeleinstellung vorgesehen sein. Dies ist insbesondere dann vorteilhaft, wenn kein Deckenkran mit ausreichender Traglast zur Verfügung steht.

In Fig. 2 ist das Prinzip einer Crossfeed-Hydraulik 60 schematisch dargestellt. Diese umfasst zwei hydraulische Zylinder bzw. Hydraulikzylinder 61, 61' mit jeweils einem Stempel 62, 62', der die Innenräume der Hydraulikzylinder 61, 61' in jeweils ein oberes Teilvolumen 63, 63' und ein unteres Teilvolumen 64, 64' unterteilt. Die Stempel werden von oben mit jeweils der Kraft beaufschlagt, die beispielsweise die Gewichtskraft oder die jeweilige Kraft, die aus einem Drehmoment aus der Antriebseinrichtung 40 resultiert, beaufschlagt. Dadurch werden beide Stempel 62, 62' nach unten gedrückt und der untere Teilraum 64, 64' jeweils verkleinert.

Es sind Hydraulikleitungen 65, 66 zwischen dem oberen Teilvolumen 63 des Hydraulikzylinders 61 und dem unteren Teilvolumen 64' des Hydraulikzylinders 61' einerseits und dem unteren Teilvolumen 64 des Hydraulikzylinders 61 und dem oberen Teilvolumen 63' des Hydraulikzylinders 61' andererseits vorgesehen, durch die die Hydraulikflüssigkeit in den jeweils miteinander verbundenen Teilvolumina miteinander kommuniziert. Dies resultiert darin, dass ein vermehrter Druck auf beispielsweise den Stempel 62 des Hydraulikzylinders 61 zu einer weiteren Verringerung des unteren Teilvolumens 64 führt. Über die Verbindungsleitung 66 wird dieser Druck auf den Stempel 62' im Hydraulikzylinder 61' weitergeleitet, der ebenfalls weiterbelastet wird. Damit kann beispielsweise ein Drehmoment kompensiert werden, das derart wirkt, dass das Drehmoment den Stempel 62' eigentlich nach oben bewegen möchte. Diese Cross-feed-Hydraulik bewirkt somit, dass ein radiales Ausweichen, das durch das Drehmoment der Antriebseinrichtung 40 erzeugt wird, verhindert wird und sich die Antriebseinrichtung 40 bezüglich des Triebstrangs nicht bewegt. Die Überkreuzung bewirkt auch, dass die aufgenommene Kräftesumme gleich Null ist.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 1: Prüfstand
- 3: Gondel
- 5: Antriebsflansch
- 6: Pitchschrank
- 7: Turmkopfdrehkranz
- 9: Azimutverstellmotoren
- 11: Azimutbremsen
- 12: Maschinenträger
- 13: Rotorwelle
- 14: Rotorlager
- 15: Getriebe
- 16: elastische Getriebeaufhängung
- 17: Rotorbremse
- 18: Schleifringüberträger
- 19: Generatorwelle mit Kupplungen
- 20: Generator
- 21: Wärmetauscher
- 30: Boden
- 31: Lagerrahmen
- 32, 32': Fuß
- 33, 33': Bolzen
- 40: Antriebseinrichtung
- 41: Großzahnrad
- 42: Ritzel
- 43: Antriebsmotor
- 45: Drehmomentenstütze
- 46: Fuß
- 48: Haltevorrichtung
- 49: Halteöffnung
- 50: Trageschiene
- 51: Laufkatze
- 52: Hebezeug
- 60: Crossfeed-Hydraulik
- 61, 61': Hydraulikzylinder
- 62, 62': Stempel
- 63, 63': oberes Teilvolumen
- 64, 64': unteres Teilvolumen
- 65, 66: Hydraulikleitung

## Patentansprüche

1. Prüfstand (1) zum Prüfen eines Triebstrangs einer Windenergieanlage, umfassend eine Antriebseinrichtung (40) zum Einbringen einer Prüfleistung in den Triebstrang, die mit einem zu prüfenden Triebstrang lösbar verbindbar ist,
wobei die Antriebseinrichtung (40) zur Prüfung eines Triebstrangs abnehmbar auf oder an dem Triebstrang auf- oder angesetzt und gelagert ist oder wird, **dadurch gekennzeichnet, dass** bei auf- oder angesetzter Antriebseinrichtung (40) ein überwiegender Teil der Gewichtskraft der Antriebseinrichtung (40) auf dem Triebstrang lastet und die Antriebseinrichtung (40) einen oder mehrere, insbesondere hydraulische oder elektrische, Antriebsmotoren (43) aufweist.

2. Prüfstand (1) nach Anspruch 1, **dadurch gekennzeichnet, dass** die Antriebseinrichtung (40) im abgenommenen Zustand frei beweglich ist.

3. Prüfstand (1) nach Anspruch 1 oder 2, **dadurch gekennzeichnet, dass** der im aufgesetzten Zustand auf dem Triebstrang lastende Teil der Gewichtskraft der Antriebseinrichtung (40) einer Gewichtskraft eines Rotors der Windenergieanlage entspricht.

4. Prüfstand (1) nach einem der Ansprüche 1 bis 3, **dadurch gekennzeichnet, dass** die Lagerung der Antriebseinrichtung (40) auf dem Triebstrang eine fliegende Lagerung ist.

5. Prüfstand (1) nach einem der Ansprüche 1 bis 4, **dadurch gekennzeichnet, dass** die Antriebseinrichtung (40) ein Großzahnrad (41) aufweist, das auf einen Antriebsflansch (5) aufsetzbar ist, sowie ein oder mehrere Ritzel (42), die am oder im Umfang des Großzahnrads (41) in eine Außenzahnung oder Innenzahnung des Großzahnrads (41) eingreifen.

6. Prüfstand (1) nach einem der Ansprüche 1 bis 5, **dadurch gekennzeichnet, dass** die Antriebsmotoren (43) jeweils auf ein Ritzel (42) einwirken, wobei die Antriebsmotoren (43) insbesondere mittels einer hydraulischen Ringleitung oder durch eine elektronische Steuerung synchronisiert sind.

7. Prüfstand (1) nach einem der Ansprüche 1 bis 6, **dadurch gekennzeichnet, dass** die Antriebseinrichtung (40) eine Drehmomentenstütze (45) umfasst, die insbesondere zwei sich auf dem Boden abstützende Stützfüße (46) aufweist.

8. Prüfstand (1) nach Anspruch 7, **dadurch gekennzeichnet, dass** die Drehmomentenstütze (45) eine Zwangslast-Kompensation, insbesondere eine Crossfeed-Hydraulik (60) oder Piezoelemente, aufweist.

9. Prüfstand (1) nach einem der Ansprüche 1 bis 8, **dadurch gekennzeichnet, dass** die Antriebseinrichtung (40) eine Haltevorrichtung (48) aufweist, an der die Antriebseinrichtung (40) anhängbar ist, wobei die Haltevorrichtung (48) insbesondere eine Mehrzahl von Halteöffnungen (49) oder ein Langloch, insbesondere mit Raststellen, für ein Hebezeug (52) aufweist, mittels denen eine Achsneigung der Antriebseinrichtung (40) im hängenden Zustand einstellbar ist.

10. Verfahren zum Prüfen eines Triebstrangs einer Windenergieanlage mit einem Prüfstand (1), insbesondere nach einem der Ansprüche 1 bis 9, wobei eine Antriebseinrichtung (40) des Prüfstands (1) auf oder an einen Triebstrang aufgesetzt oder angesetzt wird, **dadurch gekennzeichnet, dass** bei der Lagerung ein überwiegender Teil der Gewichtskraft der Antriebseinrichtung (40) auf dem Triebstrang lastet und die Antriebseinrichtung (40) einen oder mehrere, insbesondere hydraulische oder elektrische, Antriebsmotoren (43) aufweist.

11. Verfahren nach Anspruch 10, **dadurch gekennzeichnet, dass** der auf dem Triebstrang lastende Teil der Gewichtskraft der Antriebseinrichtung (40) einer Gewichtskraft eines Rotors der Windenergieanlage entspricht.

12. Verfahren nach Anspruch 10 oder 11, **dadurch gekennzeichnet, dass** die Prüfung mit der Antriebseinrichtung (40) an mehreren Triebsträngen erfolgt, wobei jeweils die Antriebseinrichtung (40) von einem geprüften Triebstrang zu einem zu prüfenden Triebstrang verfahren wird.

13. Triebstrang einer Windenergieanlage, **dadurch gekennzeichnet, dass** er mittels eines Verfahrens nach einem der Ansprüche 10 bis 12 und/oder mittels eines Prüfstands (1) nach einem der Ansprüche 1 bis 9 geprüft worden ist.

## Claims

1. A test bench (1) for testing a drive train of a wind energy installation, comprising a drive device (40) for introducing a test power into the drive train, which drive device (40) can be releasably connected to a drive train to be tested, wherein, in order to test a drive train, the drive device (40) is releasably mounted on or to, or attached on or to and supported by, the drive train, **characterised in that**, when the drive device (40) is in the mounted or attached condition, a predominant part of the weight force of the drive device (40) bears on the drive train and the drive device (40) comprises one or more drive motors (43), in particular one or more hydraulic or electric drive motors (43).

2. The test bench (1) according to claim 1, **characterised in that** the drive device (40) is freely movable when it is in the removed condition.

3. The test bench (1) according to claim 1 or 2, **characterised in that** the part of the weight force of the drive device (40) which in the mounted condition is borne by the drive train corresponds to a weight force of a rotor of the wind energy installation.

4. The test bench (1) according to any one of the claims 1 to 3, **characterised in that** the bearing of the drive device (40) on the drive train is a cantilever type bearing.

5. The test bench (1) according to any one of the claims 1 to 4, **characterised in that** the drive device (40) comprises a large gearwheel (41) which can be mounted on a drive flange (5), as well as one or more pinions (42) which engage on or in the circumference of the large gear wheel (41) in an external toothing or an internal toothing of the large gearwheel (41).

6. The test bench (1) according to any one of the claims 1 to 5, **characterised in that** the drive motors (43) each act on a respective pinion (42), wherein the drive motors (43) are synchronised, in particular by means of a hydraulic ring mains or by an electronic control facility.

7. The test bench (1) according to any one of the claims 1 to 6, **characterised in that** the drive device (40) comprises a torque support (45) which in particular comprises two support feet (46) which are supported on the ground.

8. The test bench (1) according to claim 7, **characterised in that** the torque support (45) comprises a forced load compensation, in particular a cross-feed hydraulic system (60) or piezo elements.

9. The test bench (1) according to any one of the claims 1 to 8, **characterised in that** the drive device (40) comprises a holding device (48) from which the drive device (40) can be suspended, in particular wherein the holding device (48) comprises a plurality of retaining openings (49) or an elongated hole, in particular with latching positions, for a lifting apparatus (52), by means of which an axial inclination of the drive device (40) can be adjusted when the drive device is in the suspended condition.

10. A method of testing a drive train of a wind energy installation using a test bench (1), in particular according to any one of the claims 1 to 9, wherein a drive device (40) of the test bench (1) is mounted on or to, or attached on or to a drive train, **characterised in that** in the mounted condition, a predominant part of the weight force of the drive device (40) is borne by the drive train and the drive device (40) comprises one or more drive motors (43), in particular one or more hydraulic or electric drive motors (43).

11. The method according to claim 10, **characterised in that** the part of the weight force of the drive device (40) which is borne by the drive train corresponds to a weight force of a rotor of the wind energy installation.

12. The method according to claim 10 or 11, **characterised in that** the test using the drive device (40) is carried out on a plurality of drive trains, wherein in each case the drive device (40) is moved from a drive train which has been tested to a drive train that is to be tested.

13. A drive train of a wind energy installation, **characterised in that** it has been tested by means of a method according to any one of the claims 10 to 12 and / or by means of a test bench (1) according to any one of the claims 1 to 9.

## Revendications

1. Banc d'essai (1) pour contrôler une chaîne cinématique d'une éolienne, comprenant un dispositif d'entraînement (40) pour l'introduction d'une puissance de contrôle dans la chaîne cinématique, qui peut être reliée de manière amovible à une chaîne cinématique à contrôler,
dans lequel le dispositif d'entraînement (40) pour le contrôle d'une chaîne cinématique est placé ou rapporté et logé de manière démontable sur ou au niveau de la chaîne cinématique, **caractérisé en ce que**
sur le dispositif d'entraînement (40) placé ou rapporté, une part prépondérante du poids du dispositif d'entraînement (40) repose sur la chaîne cinématique et le dispositif d'entraînement (40) présente un ou plusieurs moteurs d'entraînement (43), en particulier hydrauliques ou électriques.

2. Banc d'essai (1) selon la revendication 1, **caractérisé en ce que** le dispositif d'entraînement (40) est librement mobile à l'état démonté.

3. Banc d'essai (1) selon la revendication 1 ou 2, **caractérisé en ce que** la part du poids du dispositif d'entraînement (40) reposant sur la chaîne cinématique à l'état placé correspond à un poids d'un rotor de l'éolienne.

4. Banc d'essai (1) selon l'une quelconque des revendications 1 à 3, **caractérisé en ce que** le palier du dispositif d'entraînement (40) sur la chaîne cinématique est un palier volant.

5. Banc d'essai (1) selon l'une quelconque des revendications 1 à 4, **caractérisé en ce que** le dispositif d'entraînement (40) présente une grande roue dentée (41), qui peut être placée sur une bride d'entraînement (5), ainsi qu'un ou plusieurs pignons (42), qui viennent en prise au niveau ou dans la circonférence de la grande roue dentée (41) dans une denture extérieure ou denture intérieure de la grande roue dentée (41).

6. Banc d'essai (1) selon l'une quelconque des revendications 1 à 5, **caractérisé en ce que** les moteurs d'entraînement (43) agissent respectivement sur un pignon (42), dans lequel les moteurs d'entraînement (43) sont synchronisés en particulier au moyen d'une conduite annulaire hydraulique ou par une commande électronique.

7. Banc d'essai (1) selon l'une quelconque des revendications 1 à 6, **caractérisé en ce que** le dispositif d'entraînement (40) comprend un support de couple (45), qui présente en particulier deux pieds d'appui (46) s'appuyant sur le sol.

8. Banc d'essai (1) selon la revendication 7, **caractérisé en ce que** le support de couple (45) présente une compensation de charge forcée, en particulier une hydraulique à alimentation croisée (60) ou des éléments piézoélectriques.

9. Banc d'essai (1) selon l'une quelconque des revendications 1 à 8, **caractérisé en ce que** le dispositif d'entraînement (40) présente un dispositif de retenue (48), au niveau duquel le dispositif d'entraînement (40) peut être accroché, dans lequel le dispositif de retenue (48) présente en particulier une pluralité d'ouvertures de retenue (49) ou un trou oblong, en particulier avec des points de crantage, pour un engin de levage (52), au moyen desquels une inclinaison d'axe du dispositif d'entraînement (40) est réglable à l'état accroché.

10. Procédé pour contrôler une chaîne cinématique d'une éolienne avec un banc d'essai (1), en particulier selon l'une quelconque des revendications 1 à 9,
dans lequel un dispositif d'entraînement (40) du banc d'essai (1) est placé ou rapporté sur ou au niveau de la chaîne cinématique, **caractérisé en ce que** lors du logement, une part prépondérante du poids du dispositif d'entraînement (40) repose sur la chaîne cinématique et le dispositif d'entraînement (40) présente un ou plusieurs moteurs d'entraînement (43), en particulier hydrauliques ou électriques.

11. Procédé selon la revendication 10, **caractérisé en ce que** la part du poids du dispositif d'entraînement (40) reposant sur la chaîne cinématique correspond à un poids d'un rotor de l'éolienne.

12. Procédé selon la revendication 10 ou 11, **caractérisé en ce que** le contrôle a lieu avec le dispositif d'entraînement (40) au niveau de plusieurs chaînes cinématiques, dans lequel respectivement le dispositif d'entraînement (40) est déplacé d'une chaîne cinématique contrôlée à une chaîne cinématique à contrôler.

13. Chaîne cinématique d'une éolienne, **caractérisée en ce qu'**elle a été contrôlée au moyen d'un procédé selon l'une quelconque des revendications 10 à 12 et/ou au moyen d'un banc d'essai (1) selon l'une quelconque des revendications 1 à 9.
